# EUROPÄISCHE PATENTSCHRIFT

(11) **EP 1 200 721 B1**
(45) Veröffentlichungstag und Bekanntmachung des Hinweises auf die Patenterteilung: **25.05.2005**
(21) Anmeldenummer: 00953041.1
(22) Anmeldetag: 13.07.2000
(51) Int. Cl.: F02D 9/10

(54) **VENTIL**
VALVE
SOUPAPE

(30) Priorität: 03.08.1999 DE 19936456
(43) Veröffentlichungstag der Anmeldung: 02.05.2002
(73) Patentinhaber: FILTERWERK MANN + HUMMEL GmbH, 71631 Ludwigsburg (DE)
(72) Erfinder: JESSBERGER, Thomas, D-71277 Rutesheim (DE); REHMANN, Achim, D-75249 Kieselbronn (DE)
(74) Vertreter: Voth, Gerhard
(86) Internationale Anmeldenummer: PCT/EP2000/006672
(87) Internationale Veröffentlichungsnummer: WO 2001/009498

(56) Entgegenhaltungen:
- EP-A- 0 733 790
- WO-A-98/42969
- AU-B- 630 300
- DE-A- 19 615 438
- DE-A- 19 854 595
- DE-A- 19 915 695
- DE-U- 29 913 538
- FR-A- 2 687 601
- FR-A- 2 762 374
- GB-A- 2 245 932

## Beschreibung

Die Erfindung betrifft ein Ventil nach dem Oberbegriff des Patentanspruches 1.

Es ist aus der WO 97/04259 ein Ventil bekannt, das als Drosselklappe für eine Brennkraftmaschine eingesetzt wird. Um eine gewisse Leckluftmenge nicht zu überschreiten, besitzt die Drosselklappe einen exakt tolerierten Schließbereich, an den ein nachfolgender Genauigkeitsbereich anschließt. Die Elemente der Drosselklappe werden in Montagespritztechnik hergestellt. Mit diesem Verfahren wird die Genauigkeit der Spaltbreite gewährleistet. Da das Verhältnis der Spritzgewichte der beiden Komponenten nicht größer als 1:3 bis 1:5 differieren soll, kann ein Gehäuse nicht mitgefertigt werden. Daher werden die Drosselklappenelemente in ein mehrteiliges Gehäuse eingebracht, weiches im Saugkanal befestigt wird.

Die Herstellung und Montage mehrerer Gehäuseteile ist jedoch aufwendig und teuer.

Die Aufgabe der Erfindung besteht darin, die oben genannten Nachteile zu vermeiden. Diese Aufgabe wird durch die Merkmale des Patentanspruches 1 gelöst.

### Vorteile der Erfindung

Das erfindungsgemäße Ventil besitzt ein Gehäuse, welches einteilig ausgeführt ist und als Verbindungsstück für die Zu- und Ableitung dient.

Zum Regeln des Volumenstroms wird eine Klappe verwendet, die in einen Klappenrahmen so eingebracht ist, daß die Teile einen Spalt erzeugen. Dieser Spalt besitzt eine exakt definierte Spaltgeometrie, welche eine verschleißarme Bewegung der Klappe bei einer ausreichenden Dichtheit der Baugruppe, ohne den Einsatz zusätzlicher Dichtmaterialien zwischen Klappe und Klappenrahmen, gewährleistet. Dazu ist ein Schließbereich und ein Genauigkeitsbereich vorhanden. Der Schließbereich ist so ausgebildet, daß er nur eine minimale, für den Betrieb unerhebliche Leckage zuläßt. Dieser Schließbereich wird von dem Klappenrahmen und der Klappe gebildet, wobei der Klappenrahmen die äußere Begrenzung darstellt, an welche sich die Klappe mit einer Fläche nahezu dichtend anlegt. Um bei der Bedienung des Ventils keine abrupte Strömungsänderung zu verursachen, ist dem Schließbereich ein Genauigkeitsbereich nachgeordnet, welcher eine strömungstechnisch vorteilhafte Progressionszone aufweist. Dieser Genauigkeitsbereich wird ebenfalls vom Klappenrahmen gebildet und durch Bewegen der Klappe durchlaufen. Bei geöffneter Klappenstellung stellt der Klappenrahmen einen Durchflußbereich für das Fluid dar. Der Durchflußbereich ist so gestaltet, daß mit zunehmendem Öffnungswinkel der Klappe der Spalt zwischen Klappe und Klappenrahmen zunimmt.

Die Klappe weist Lagerbereiche auf, die in Form von Lagerzapfen an die Klappe angeformt sein können oder als Aufnahme für eine Achse dienen, auf welcher die Klappe befestigt ist. Die Klappe kann z.B. durch Schrauben, Nieten oder Schweißen auf der Achse befestigt werden. Die Klappe mit ihren Lagerbereichen ist in den Klappenrahmen so eingebracht, daß ein Achs- bzw. Lagerende aus dem Klappenrahmen herausragt und zum Bewegen der Klappe verwendet werden kann. Der Klappenrahmen kann die Lagerbereiche der Klappe teilweise oder vollständig umschließen. Bei einer teilweisen Umschließung der Lagerstellen durch den Klappenrahmen besitzt das Gehäuse ebenfalls Lagerstellen. Sind die Lagerbereiche vollständig von dem Klappenrahmen umschlossen, so schließt das Gehäuse nur den Klappenrahmen ein. Für die Lagerstellen ist eine tribologisch vorteilhafte Materialpaarung zu wählen.

Die vormontierten Ventilteile werden in ein Werkzeug eingelegt und dann von dem einteiligen Gehäuse ohne zusätzliches Dichtmaterial in einem Arbeitsgang umgossen. Durch die einteilige Ausführung werden zusätzliche Bauteile, die zur Befestigung notwendig wären, eingespart. Für das großvolumige Gehäuse kann man ein preiswertes Material z.B. Polyamid wählen, da die Funktionsteile von dem Gehäuse entkoppelt sind. Für die Funktionsteile kann aufgrund des geringen Teitevolumens ein hochwertiges Material eingesetzt werden.

Eine vorteilhafte Ausbildung des Erfindungsgedankens ist die Verwendung des Spritzgießverfahrens zur Herstellung des Gehäuses. Hierbei bilden die vormontierten Ventilteile einen Teil der Spritzgußform für das Gehäuse. Nach dem Spritzgußvorgang sind die vormontierten Ventilteile von dem Gehäuse dichtend umschlossen.

Gemäß einer weiteren Variante der Erfindung ist die Klappe mit dem Klappenrahmen in Montagespritztechnik hergestellt Das Spritzgewicht der Bauteile liegt im optimalen Verhältnis zwischen 1:3 und 1:5. Für zu große Differenzen des Spritzgewichtes sind derzeit keine Maschinen verfügbar. Durch eine gezielte Prozeßsteuerung kann das Lagerspiel durch die unterschiedliche Schrumpfung der Materialien zwischen der Klappe und dem Klappenrahmen optimal eingestellt werden. Dies gilt auch für den Spalt, den die Klappe mit dem Klappenrahmen erzeugt.

Eine besondere Ausführungsform der Erfindung sieht die dichtende Verbindung des Gehäuses mit den angrenzenden Bauteilen vor. Dazu kann eine Dichtung in eine dafür vorgesehene Aufnahme eingelegt und das Gehäuse anschließend mit den angrenzenden Bauteilen verschraubt oder verspannt werden.

Eine weitere Variante zur dichtenden Verbindung des Gehäuses mit den angrenzenden Bauteilen ist das Verschweißen der Teile miteinander durch z.B. Vibrationsschweißen.

Eine vorteilhafte Ausbildung der Erfindung ist die Integration von einem oder mehreren Anschlußstutzen in das Gehäuse. An diesen Anschlußstutzen können Entlüftungsleitungen, z.B. Kurbeigehäuseentlüftung oder Tankentlüftung angeschlossen werden.

Eine besondere Ausführungsform der Erfindung ist die Ausbildung des Gehäuses als Saugrohr. Bei dieser Ausführung wird die vormontierte Klappeneinheit (Klappe und Klappenrahmen) direkt in die Saugrohrform eingelegt und umspritzt. Dadurch entfallen zusätzliche Bauteile, Arbeitsschritte und Kosten.

Es ist vorteilhaft, eine Aufnahme für einen Elektroantrieb in dem Gehäuse vorzusehen. In dieser Aufnahme könnte beispielsweise der Antrieb für die Klappe untergebracht sein.

### Zeichnung

Ein Ausführungsbeispiel der Erfindung wird nachfolgend anhand der Zeichnung erläutert.

Hierbei zeigt
- Figur 1: ein Ventil im Schnitt in geschlossener Stellung,
- Figur 2: ein Ventil im Schnitt in geöffneter Stellung und
- Figur 3: einen Ausschnitt einer Lagerung im Schnitt.

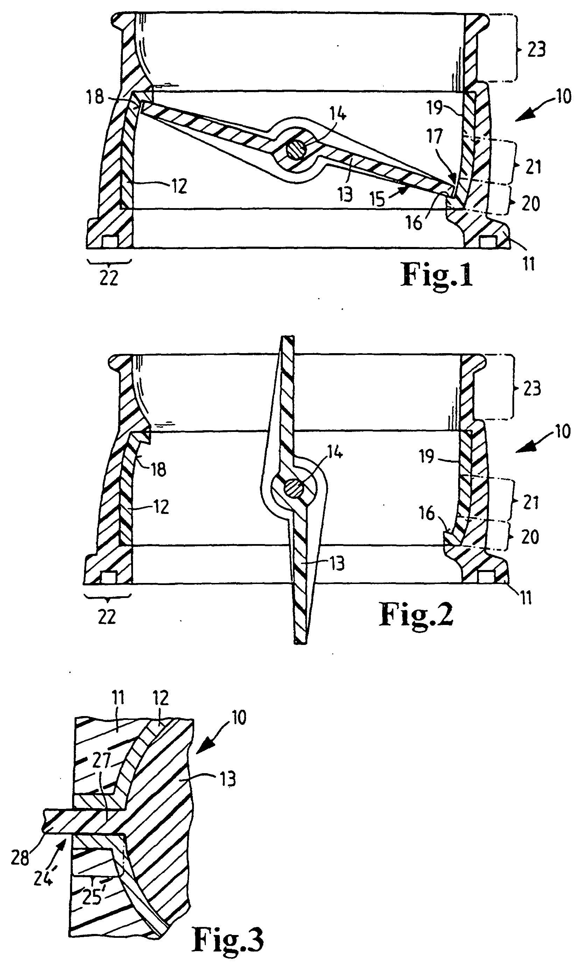

In Figur 1 ist ein Ventil 10 in geschlossener Stellung im Schnitt dargestellt. Das Ventil 10 besitzt ein einstückiges Gehäuse 11, einen Klappenrahmen 12, eine Klappe 13 und eine Achse 14. Die Klappe 13 ist mit der Achse 14 fest verbunden, so daß eine rotatorische Bewegung der Achse 14 eine rotatorische Bewegung der Klappe 13 bewirkt. In der abgebildeten Ventitstellung liegt die Klappe 13 mit einer Stirnseite 15 an einer Anlage 16 an. Die Klappe 13 und der Klappenrahmen 12 werden in Montagespritztechnik hergestellt. Zuerst wird die Achse 14 in ein Spritzgußwerkzeug, das die Kavitäten für den Klappenrahmen 12 bildet, eingelegt, dann wird der Klappenrahmen 12 gespritzt. Nachdem der Klappenrahmen 12 ausreichend erkaltet ist, öffnet das Werkzeug und gibt die Kavitäten für die Klappe 13 frei, wobei der Klappenrahmen 12 einen Teil der Form für die Klappe 13 bildet Beim Spritzen der Klappe 13 füllt der Kunststoff die Form aus und kommt in direkten Kontakt mit dem Klappenrahmen 12. Dieser ist jedoch ausreichend erstarrt und geht somit keine Verbindung mit der Klappe 13 ein. Beim Erkalten schrumpft die Klappe 13 und gibt somit einen Spalt 17 frei. Dieser Spalt 17 wird zwischen einer Umfangsfläche18 der Klappe 13 und einer Innenfläche 19 des Klappenrahmens 12 gebildet und kann prozeßtechnisch optimiert werden. Durch diese Fertigungsmethode entstehen weder ein Versatz noch Toleranzen, die zu Undichtheiten führen. Die Anlage 16 bildet mit der Stirnseite 15 einen Schließbereich 20, an den sich ein Genauigkeitsbereich 21 anschließt. Der Genauigkeitsbereich 21 verhindert eine abrupte Strömungsveränderung.

Die vormontierte Einheit aus Klappenrahmen 12, Klappe 13 und Achse 14 wird in das Spritzgußwerkzeug für das Gehäuse 11 eingelegt. Anschließend wird das einteilige Gehäuse 11 gespritzt. Nach dem Spritzvorgang enthält das Ventil 10 ein einteiliges Gehäuse 11, das den Klappenrahmen 12 umschließt. Untereinander benötigen die Ventilteile 11,12,13,14 keine zusätzlichen Dichtungen, da sie ausreichend dicht miteinander verbunden sind.

Das Gehäuse 11 enthält einen Schweißbereich 22, welcher dichtend mit dem angrenzenden Bauteil verschweißt werden kann. Des weiteren ist das Gehäuse 11 so ausgebildet, daß es einen Klemmbereich 23 aufweist, auf den ein anderes angrenzendes Bauteil aufgesteckt und mit einer Rohrschelle dichtend befestigt werden kann.

In Figur 2 ist das Ventil 10 in geöffneter Stellung abgebildet. Die Klappe 13 bildet bei einem Öffnungswinkel von 90° den geringsten Durchflußwiderstand. Durch eine rotatorische Bewegung im Uhrzeigersinn vergrößert sich der Durchflußwiderstand und das Durchströmvolumen nimmt ab. Beim Eintritt der Klappe 13 in den Genauigkeitsbereich 21 verringert sich das Durchströmvolumen kontinuierlich, bis die Klappe 13 in den Schließbereich 20 eintritt und das Ventil 10 abdichtet.

In Figur 3 ist ein Ausschnitt aus einer Lagerung 24' dargestellt. Bei dieser Ausführung ist ein Lagerzapfen 27 direkt an die Klappe 13 angeformt. Der Lagerzapfen 27 ist in einer Lagerstelle 25' drehbar gelagert. Ein hervorstehendes Lagerzapfenende 28 wird zur Bewegung der Klappe 13 verwendet. Bei dieser Ausführung steht das Gehäuse 11 nicht in direktem Kontakt mit der Lagerstelle 25'.

## Patentansprüche

1. Ventil (10), insbesondere Drosselklappe für eine Verbrennungskraftmaschine, umfassend wenigstens eine Klappe (13), einen feststehenden Klappenrahmen (12) und ein feststehendes Gehäuse (11), wobei die Klappe (13) mindestens einen Lagerbereich aufweist, der relativ zu den feststehenden Elementen beweglich ist und mindestens ein feststehendes Element Lagerbereiche aufweist, und wobei der Klappenrahmen (12) einen Schließbereich (20) umfasst, wobei das einteilige Gehäuse nachträglich um die anderen Ventilteile gegossen ist, und wobei das Gehäuse (11), der Klappenrahmen (12) und die Klappe (13) aus Kunststoff bestehen, **dadurch gekennzeichnet, dass** der Lagerbereich der Klappe (13) als Lagerzapfen an die Klappe (13) angeformt und die Klappe (13) in den Klappenrahmen (12) hineingespritzt ist.

2. Ventil (10) nach Anspruch 1, **dadurch gekennzeichnet, dass** das Spritzgewicht der Klappe (13) zu dem Klappenrahmen (12) im Verhältnis 1:3 liegt.

3. Ventil (10) nach Anspruch 1 oder 2, **dadurch gekennzeichnet, dass** das Gehäuse (11) dichtend mit den angrenzenden Bauteilen verbindbar ist.

4. Ventil (10) nach einem der vorangehenden Ansprüche, **dadurch gekennzeichnet, dass** das Gehäuse (11) mit den angrenzenden Bauteilen dichtend verschweißbar ist.

5. Ventil (10) nach einem der vorangehenden Ansprüche, **dadurch gekennzeichnet, dass** das Gehäuse (11) einen Anschlussstutzen enthält.

6. Ventil (10) nach einem der vorangehenden Ansprüche, **dadurch gekennzeichnet, dass** das Gehäuse (11) einem Saugrohr entspricht.

7. Ventil (10) nach einem der vorangehenden Ansprüche, **dadurch gekennzeichnet, dass** das Gehäuse (11) eine Aufnahme für einen Elektroantrieb aufweist.

## Claims

1. Valve (10), more especially throttle flap for an internal combustion engine, said valve including at least one flap (13), a stationary flap frame (12) and a stationary housing (11 ), wherein the flap (13) has at least one bearing region, which is displaceable relative to the stationary elements, and at least one stationary element has bearing regions, and wherein the flap frame (12) includes a closing region (20), wherein the one-part housing is moulded subsequently around the other valve parts, and wherein the housing (11), the flap frame (12) and the flap (13) are produced from plastics materials, **characterised in that** the bearing region of the flap (13) is integrally moulded on the flap (13) in the form of a pin and the flap (13) is injected into the flap frame (12).

2. Valve (10) according to claim 1, **characterised in that** the ratio of the injection weight of the flap (13) to the flap frame (12) is 1:3.

3. Valve (10) according to claim 1 or 2, **characterised in that** the housing (11) is connectable in a sealing manner to the adjacent components.

4. Valve (10) according to one of the preceding claims, **characterised in that** the housing (11) is weldable in a sealing manner to the adjacent components.

5. Valve (10) according to one of the preceding claims, **characterised in that** the housing (11) contains a connection pipe.

6. Valve (10) according to one of the preceding claims, **characterised in that** the housing (11) corresponds with an intake manifold.

7. Valve (10) according to one of the preceding claims, **characterised in that** the housing (11) has a receiving means for an electric drive.

## Revendications

1. Soupape (10), en particulier clapet d'étranglement, pour un moteur à combustion interne, comprenant au moins un clapet (13), un corps de clapet (12) immobile et un boîtier (11) immobile, le clapet (13) présentant au moins une zone de palier mobile relativement aux éléments immobiles avec au moins un élément immobile ayant des zones de palier, alors que le corps de clapet (12) présente une zone de fermeture (20), le boîtier monobloc étant coulé après autour des autres pièces de soupape, et le boîtier (11), le corps de clapet (12) et le clapet (13) étant en matière synthétique,
**caractérisée en ce que**
la zone de palier du clapet (13) est moulée comme tourillon sur le clapet (13), et le clapet (13) est injecté dans le corps de clapet (12).

2. Soupape (10) selon la revendication 1,
**caractérisée en ce que**
le poids d'injection du clapet (13) est dans 1 : 3 rapporté au corps de clapet (12).

3. Soupape (10) selon la revendication 1 ou 2,
**caractérisée en ce que**
le boîtier (11) peut être relié aux pièces voisines de façon à faire étanchéité.

4. Soupape (10) selon l'une quelconque des revendications précédentes,
**caractérisée en ce que**
le boîtier (11) peut être soudé aux pièces voisines de façon à faire étanchéité.

5. Soupape (10) selon l'une quelconque des revendications précédentes,
**caractérisée en ce que**
le boîtier (11) contient un embout de raccord.

6. Soupape (10) selon l'une quelconque des revendications précédentes,
**caractérisée en ce que**
le boîtier (11) correspond à une tubulure d'admission.

7. Soupape (10) selon l'une quelconque des revendications précédentes,
**caractérisée en ce que**
le boîtier (11) présente une réception pour un entraînement électrique.
